# EUROPEAN PATENT SPECIFICATION

(11) **EP 0 799 693 B1**
(45) Date of publication and mention of the grant of the patent: **31.03.2010**
(21) Application number: 97101685.2
(22) Date of filing: 04.02.1997
(51) Int. Cl.: B32B 25/20, C08J 7/04

(54) **Silicone gel sheets and method for the preparation thereof**
Folien aus Silikongel und Verfahren zu ihrer Herstellung
Feuilles en gel de silicone et procédé de préparation

(30) Priority: 06.02.1996 JP 4424896
(43) Date of publication of application: 08.10.1997
(73) Proprietor: Dow Corning Toray Co., Ltd., Tokyo (JP)
(72) Inventor: Onishi, Masayuki, Dow Corning Toray Sil. Co. Ltd., Ichihara-shi, Chiba Prefecture (JP); Sekiba, Kazuhiro, Dow Corning Toray Sil. Co. Ltd., Ichihara-shi, Chiba Prefecture (JP)
(74) Representative: Fleischer, Holm Herbert

(56) References cited:
- EP-A- 0 314 847
- EP-A- 0 431 979
- US-A- 4 163 082
- DATABASE WPI Section Ch, Week 8703 Derwent Publications Ltd., London, GB; Class A26, AN 87-018924 XP002106457 & JP 61 277414 A (TOSHIBA SILICONE KK) , 8 December 1986

## Description

This invention relates to a silicone gel sheet having good handling properties that bears a silicone rubber film on one and only one surface and to a very efficient method for the preparation of said sheet. This invention also relates to a thermally conductive silicone gel sheet to which heat- generating electrical and electronic components can be temporarily affixed to heat-radiating fins and metal sheets. The thermally conductive silicone sheets of the present invention also support easy component exchange. The invention also relates to a very efficient method for preparing the thermally conductive silicone gel sheet.

The silicone gel sheet fabricated by curing a silicone gel composition into a sheet configuration generally exhibits tack and shape-conformability and as a result is used as a pressure-sensitive adhesive sheet. When a thermally conductive filler is present in this sheet, it can be used as a thermally conductive silicone gel sheet that supports a very efficient radiation of the heat from heat-generating electrical and electronic components by providing intimate contact and adhesion between such components and a heat-radiating fin or heat-radiating metal sheet through the application of moderate pressure. Said heat-generating components are exemplified by power transistors, power modules, thyristors, rectifiers, and transformers.

However, these silicone gel sheets readily take up fingerprints and dust due to their tack. In addition, they are easily deformed and torn due to their low mechanical strength, which causes them to have very poor handling characteristics. As a result, the attachment of such a silicone gel sheet between an electrical or electronic component and a heat-radiating fin or heat-radiating metal sheet is encumbered by such problems as an inability to temporarily affix these components and, after component attachment, by an inability to exchange or replace the component.

Methods that inhibit fingerprint and dust uptake by reducing the tacky character of the silicone gel are exemplified by the following. In one such method the electrical or electronic component, e.g., an IC, hybrid IC, power transistor, capacitor, etc., is first coated with a silicone gel; the surface of the silicone gel is then coated with organopolysiloxane bearing silicon-bonded hydrogen or alkenyl; and the gel is thereafter subjected to an additional cure, which forms a silicone rubber film on the surface of the gel (refer to JPAs 1-25704 6-45222. In another such method, an electrical or electronic component as described above is coated with a silicone gel composition; the surface of this composition is then coated with SiH-functional organopolysiloxane; and the composition is thereafter cured to yield a silicone rubber film on the surface of a silicone gel (refer to JP-A 61-277414 (1986). In another method, an electrical or electronic component as described above is coated with a silicone gel composition; the surface of this composition is then coated with a curable silicone rubber composition; and these compositions are thereafter simultaneously cured with the formation of a silicone rubber layer on the surface of a silicone gel (refer to JP-As 5-69511 and 5-69512. Yet another method consists of coating SiH-functional organopolysiloxane on the inner surface of a molding die and then pouring a silicone gel composition into this molding die in order to form a silicone rubber film on the surface layer of the resulting silicone gel molding (refer to JP-A 88281.

However, each of the methods proposed in JP-As 1-25704 and 6-45222 and JP-As 61-277414, 5-69511, and 5-69512 relates to a method in which the electrical or electronic component is covered with silicone gel and thus cannot be readily applied to silicone gel sheet. In addition, the method disclosed in JP-A 6-88281 is very unsuitable for the fabrication of silicone gel sheet bearing a silicone rubber film on a single surface.

On the other hand, the following have been proposed, for example, in order to improve the handling characteristics of silicone gel sheets: silicone gel sheet in which a silicone gel layer is laminated on a silicone rubber layer (JP-A 2-196453; silicone gel sheet afforded by laminating silicone gel on a silicone rubber sheet itself fabricated by coating and curing silicone rubber into a network-like reinforcing material such as, for example, glass cloth (JP-A 6-155517; and silicone gel sheet in which metal foil has been installed on a single surface (JP-A 6-291226).

However, the silicone gel sheets proposed in JP-As 2-196453, 6-155517, and 6-291226 are disadvantageous in that they no longer exhibit the shape-conforming capacity originally present in the silicone gel sheet itself. In addition, the silicone gel sheets taught in the first two of these references suffer from a low adhesive strength at the interface between the silicone gel and silicone rubber layers. This results in debonding at the interface when these sheets are subjected to thermal cycling or flexural fatigue over extended periods of time.

The inventors achieved the present invention as a result of extensive research directed to solving the problems described above.

In specific terms, an object of the present invention is to provide a good handling silicone gel sheet that bears a silicone rubber film on one and only one surface. An additional object of the present invention is to provide a very efficient method for the preparation of said sheet. Another object of the present invention is to provide a thermally conductive silicone gel sheet that can temporarily affix the components in the attachment of heat-generating electrical and electronic components to heat-radiating fins and heat-radiating metal sheets and that, after component attachment, supports facile component exchange. Another object of the present invention is to provide a very efficient method for preparing the said thermally conductive silicone gel sheet.

With regard to silicone gel sheet afforded by the cure of an addition reaction-curing silicone composition and having a penetration according to JIS K 2207 of 20 to 200, the silicone gel sheet according to the present invention is **characterized in that** a silicone rubber film is formed on a single surface of the said sheet.

The method according to the present invention for the preparation of the silicone gel sheet is characterized by curing into sheet form an addition reaction-curing silicone composition as defined in present claim 1 residing on a releasing substrate that is coated with a thin film of organopolysiloxane bearing at least 3 silicon-bonded hydrogen atoms and/or alkenyl groups in each molecule or residing between a releasing substrate coated with the said organopolysiloxane and a releasing substrate not coated with the said organopolysiloxane.

The silicone gel sheet according to the present invention will be considered in detail first. The silicone gel sheet according to the present invention is characterized by the presence of silicone rubber film on a single surface of silicone gel sheet afforded by the cure of an addition reaction-curing silicone composition and having a penetration of 20 to 200 according to JIS K 2207. The subject silicone gel sheet is afforded by the cure of an addition reaction-curing silicone composition, and the penetration of the silicone gel according to JIS K 2207 should be from 20 to 200. Silicone gel and silicone rubber with a penetration below 20 exhibit a poor tack and shape conformability, which restricts the applications of the corresponding sheet. At the other end of the range, the soft or fluid silicone gels having penetrations in excess of 200 yield a sheet with very poor handling characteristics. While the subject silicone gels exhibit tack as a general rule, their actual tack force is not critical.

The silicone rubber film present on a single surface of the silicone gel sheet is formed there by raising the crosslink density of the silicone gel-forming, addition reaction-curing silicone composition through the use of organopolysiloxane-type crosslinker. Silicone gel sheet bearing such a silicone rubber film essentially differs from the prior-art integral moldings of a silicone gel layer and a silicone rubber layer that have been produced by (i) simultaneously curing an addition reaction-curing silicone gel composition and an addition reaction-curing silicone rubber composition or (ii) curing a silicone rubber composition onto silicone gel already generated by the cure of an addition reaction curing silicone gel composition. The essential difference here is that the subject silicone gel sheet is an integrally molded sheet in which it is impossible to clearly distinguish the silicone gel layer/silicone rubber layer bonding interface and which has a structure in which the silicone gel and silicone rubber film are truly indivisible.

The organopolysiloxane-type crosslinker to be used to form the aforesaid silicone rubber film is organopolysiloxane having an average of at least three reactive groups per molecule, wherein the reactive groups are selected from the group consisting of silicon-bonded hydrogen atoms and silicone bonded alkenyl groups. The molecular structure of the subject organopolysiloxane is exemplified by straight-chain, partially branched straight-chain, branched-chain, cyclic, and network structures. The silicon-bonded organic groups in the organopolysiloxane are preferably selected from the group consisting of alkyl, alkenyl, aryl, aralkyl and haloalkyl groups. The preferred alkyl groups are methyl, ethyl, propyl, butyl, pentyl, hexyl, and heptyl. The preferred alkenyl groups are vinyl, allyl, butenyl, pentenyl, hexenyl, and heptenyl. The preferred aryl groups are phenyl, tolyl, xylyl, and naphthyl. The preferred aralkyl groups are benzyl, and phenethyl. The preferred haloalkyl groups are chloromethyl, 3-chloropropyl, and 3,3,3-trifluoropropyl. The use of methyl, vinyl, and phenyl is particularly preferred. The organopolysiloxane under discussion will in practice be a liquid or a gum. Its viscosity at 25°C is preferably from 1 to 500,000 centipoise and more preferably from 5 to 100,000 centipoise.

In preferred embodiments, the organopolysiloxane-type crosslinker which has an average of at least three silicon-bonded hydrogen atoms per molecule is selected from the group consisting of trimethylsiloxy-endblocked methylhydrogenpolysiloxanes, trimethylsiloxy-endblocked dimethylsiloxane-methylhydrogensiloxane copolymers, trimethylsiloxy-endblocked dimethylsiloxane-methylhydrogensiloxane-methylphenylsiloxane copolymers, dimethylhydrogensiloxy-endblocked dimethylsiloxane-methylphenylsiloxane copolymers, organopolysiloxane copolymers composed of the R¹₃SiO_{1/2} and R¹₂HSiO_{1/2} siloxane units and small amounts of the SiO_{4/2} siloxane unit, organopolysiloxane copolymers composed of the R¹₂HSiO_{1/2} siloxane unit and small amounts of the SiO_{4/2} siloxane unit, organopolysiloxane copolymers composed of the R¹HSiO_{2/2} siloxane unit and small amounts of the R¹SiO_{3/2} or HSiO_{3/2} siloxane unit, and mixtures of two or more selections from these organopolysiloxanes. R¹ in the preceding formulas is a non-alkenyl monovalent hydrocarbon group and is exemplified by the groups already listed above.

In preferred embodiments, the organopolysiloxane-type crosslinker which has an average of at least three silicon-bonded alkenyl groups per molecule is selected from the group consisting of trimethylsiloxy-endblocked dimethylsiloxane-methylvinylsiloxane copolymers; trimethylsiloxy-endblocked methylvinylpolysiloxanes; trimethylsiloxy-endblocked dimethylsiloxane-methylvinylsiloxane-methylphenylsiloxane copolymers; dimethylvinylsiloxy-endblocked methylvinylpolysiloxanes; dimethylvinylsiloxy-endblocked dimethylsiloxane-methylvinylsiloxane copolymers; dimethylvinylsiloxy-endblocked dimethylsiloxane-methylvinylsiloxane-methylphenylsiloxane copolymers; organopolysiloxane copolymers composed of the R¹₃SiO_{1/2}, R¹₂R²SiO_{1/2}, and R¹₂SiO_{2/2} siloxane units and small amounts of the SiO_{4/2} siloxane unit; organopolysiloxane copolymers composed of the R¹₂R²SiO_{1/2} and R¹₂SiO_{2/2} siloxane units and small amounts of the SiO_{4/2} siloxane unit; organopolysiloxane copolymers composed of the R¹R²SiO_{2/2} siloxane unit and small amounts of the R¹SiO_{3/2} or R²SiO_{3/2} siloxane unit; and mixtures of 2 or more selections from these organopolysiloxanes. R¹ in the preceding formulas is the same as above, while R² is an alkenyl groups. In preferred embodiments, R² is selected from the groups consisting of vinyl, allyl, butenyl, pentenyl, hexenyl, and heptenyl.

Additional preferred organopolysiloxane-type crosslinkers of the present invention are selected from the group consisting of trimethylsiloxy-endblocked methylhydrogensiloxane-methylvinylsiloxane copolymers; trimethylsiloxy-endblocked dimethylsiloxane-methylhydrogensiloxane-methylvinylsiloxane copolymers; dimethylhydrogensiloxy-endblocked dimethylsiloxane-methylvinylsiloxane copolymers; organopolysiloxane copolymers composed of the R¹₃SiO_{1/2}, R¹₂HSiO_{1/2}, and R¹₂R²SiO_{1/2} siloxane units and small amounts of the SiO_{4/2} siloxane unit; organopolysiloxane copolymers composed of the R¹₂HSiO_{1/2} and R¹₂R²SiO_{1/2} siloxane units and small amounts of the SiO_{4/2} siloxane unit; and organopolysiloxane copolymers composed of the R¹HSiO_{2/2} and R¹R²SiO_{2/2} siloxane units and small amounts of the R¹SiO_{3/2} or HSiO_{3/2} siloxane unit; and mixtures of 2 or more selections from these organopolysiloxanes. R¹ in the preceding formulas is a non-alkenyl monovalent hydrocarbon group and is exemplified by the groups already listed above, while R² is an alkenyl group and is exemplified as above.

The tack force of the surface of the silicone rubber film is lower than the tack force of the silicone gel surface but is not otherwise critical. The difference in the tack forces is determined using a probe tack tester in accordance with the method of ASTM D 2979. From a practical standpoint, the tack force of the surface of the silicone rubber film preferably does not exceed 80% of the tack force of the associated silicone gel surface.

The silicone gel can contain those inorganic fillers ordinarily used in addition reaction-curing silicone compositions. The silicone gel must contain a thermally conductive filler when used as a thermally conductive silicone gel sheet. Preferred thermally conductive filler include quartz, alumina, magnesia, zinc white, boron nitride, aluminum nitride, silicon nitride, and mica. The thermally conductive filler preferably has an average particle size of 0.01 to 50 micrometers. The content of the thermally conductive filler in the silicone gel is from 50 to 95 weight% of the thermally conductive gel.

The dimensions of the silicone gel sheet are not critical and should be selected as appropriate to the particular application. For example, when the silicone gel sheet is used as a thermally conductive silicone gel sheet for joining an electrical or electronic component to a heat-radiating fin or heat-radiating metal sheet, its thickness is preferably from 0.01 to 50 mm and particularly preferably from 0.1 to 10 mm. In addition, fabric, either natural or synthetic and woven or nonwoven, may be used as a support or carrier in the silicone gel layer of the silicone gel sheet. The subject woven and nonwoven fabrics are preferably selected from the group consisting of woven and nonwoven fabrics of cellulose fiber, polyester fiber, polypropylene fiber, polyvinyl alcohol fiber, nylon fiber, aramid fiber, and glass fiber.

In a preferred embodiment, a release sheet is placed on both surfaces or at least on the silicone gel surface of the silicone gel sheet and is peeled off just prior to use of the silicone gel sheet. This release sheet is preferably selected from the group consisting of films of an organic resins selected from the group consisting of fluororesin, polyethylene resin, polypropylene resin, and polyester resin; paper coated with the aforementioned organic resins; and paper treated with fluorosilicone resin.

The preparative method according to the present invention will now be explained in detail. The preparative method according to the present invention commences with the application to a releasing substrate of a thin film of organopolysiloxane having an average of at least three reactive groups per molecule, wherein the reactive groups are selected from the group consisting of silicon-bonded hydrogen groups and silicon-bonded alkenyl groups. The material constituting the releasing substrate should not stick even to the silicone gel sheet afforded by the cure of the addition reaction-curing silicone composition and should be peelable therefrom, but is not otherwise particularly restricted in its character. When the composition will be cured at elevated temperature, the substrate must exhibit heat resistance. The releasing substrate is preferably selected from the group consisting of fluororesins, polypropylene resins, polyethylene resins, and polyester resins. The organopolysiloxane to be applied on the surface of the releasing substrate is exemplified by the organopolysiloxane-type crosslinkers described above.

As long as a thin film is laid down, the quantity of application of the organopolysiloxane to the releasing substrate is not otherwise critical. A thin film will not be obtained when the applied quantity becomes too large. In addition, the properties, such as the tack force and mechanical properties, of the silicone rubber film formed on the one surface of the silicone gel sheet become nonuniform at excessively large applications. When, on the other hand, too little of this organopolysiloxane is applied, a silicone rubber film will not be formed on the one surface of the silicone gel sheet product. The quantity of application is preferably from 0.00001 to 0.1 g/10 cm², more preferably from 0.00005 to 0.05 g/10 cm², and particularly preferably from 0.0001 to 0.01 g/10 cm². The preferred techniques for the uniform application of the organopolysiloxane on the releasing substrate are spray coating, brush coating, and application from paper or sponge soaked with the organopolysiloxane. The organopolysiloxane can also be applied after a preliminary dilution with organic solvent, e.g., toluene, xylene, hexane, octane, acetone, methyl ethyl ketone, etc. The organic solvent is then evaporated off after application. The uniform application of the organopolysiloxane to the releasing substrate is very important for the present invention.

In the next step, an addition reaction-curing silicone composition is cured in sheet form either on the aforementioned organopolysiloxane-coated releasing substrate or between the aforementioned organopolysiloxane-coated releasing substrate and releasing substrate not coated with the organopolysiloxane. The cure of this addition reaction-curing silicone composition should yield a tacky silicone gel having a penetration of from 20 to 200 according to JIS K 2207. Silicone compositions of this nature are exemplified by the composition comprising
(A) an organopolysiloxane containing an average of at least two alkenyl groups per molecule,
(B) an organopolysiloxane containing an average of at least two silicon-bonded hydrogen atoms per molecule, in a quantity that affords values of from 0.1 to 10 for the molar ratio of SiH in this component to alkenyl in component (A), and
(C) a platinum catalyst, in a quantity that provides 0.1 to 1,000 weight-ppm (based on the composition) platinum metal from this component.

The organopolysiloxane (A), which is the base ingredient of the composition under consideration, contains an average of at least two alkenyl groups per molecule. The alkenyl in component (A) is preferably selected from the group consisting of vinyl, allyl, butenyl, pentenyl, hexenyl, and heptenyl, with vinyl being particularly preferred. The alkenyl can be bonded in component (A), for example, at the molecular chain terminal and/or in nonterminal position along the molecular chain. The non-alkenyl silicon-bonded organic groups in component (A) are preferably selected from the group consisting of alkyl, aryl, aralkyl and haloalkyl groups. The preferred alkyl groups are methyl, ethyl, propyl, butyl, pentyl, hexyl, and heptyl. The preferred aryl groups are phenyl, tolyl, xylyl, and naphthyl. The preferred aralkyl groups are benzyl, and phenethyl. The preferred haloalkyl groups are chloromethyl, 3-chloropropyl, and 3,3,3-trifluoropropyl. Methyl and phenyl are particularly preferred.

The molecular structure of component (A) is exemplified by straight-chain, partially branched straight-chain, cyclic, and branched-chain structures. Component (A) preferably has a substantially straight-chain structure when component (B) has a branched-chain structure. Component (A) preferably has a viscosity at 25°C from 10 to 500,000 centipoise and particularly preferably from 50 to 100,000 centipoise because such values afford a good handling composition and afford a silicone gel product with good physical properties.

The organopolysiloxane (A) is preferably selected from the group consisting of trimethylsiloxy-endblocked dimethylsiloxane-methylvinylsiloxane copolymers; trimethylsiloxy-endblocked methylvinylpolysiloxanes; trimethylsiloxy-endblocked dimethylsiloxane-methylvinylsiloxane-methylphenylsiloxane copolymers; dimethylvinylsiloxy-endblocked dimethylpolysiloxanes; dimethylvinylsiloxy-endblocked methylvinylpolysiloxanes; dimethylvinylsiloxy-endblocked dimethylsiloxane-methylvinylsiloxane copolymers; dimethylvinylsiloxy-endblocked dimethylsiloxane-methylvinylsiloxane-methylphenylsiloxane copolymers; organopolysiloxane copolymers composed of the R¹₃SiO_{1/2}, R¹₂R²SiO_{1/2}, and R¹₂SiO_{2/2} siloxane units and small amounts of the SiO_{4/2} siloxane unit; organopolysiloxane copolymers composed of the R¹₂R²SiO_{1/2} and R¹₂SiO_{2/2} siloxane units and small amounts of the SiO_{4/2} siloxane unit; organopolysiloxane copolymers composed of the R¹R²SiO_{2/2} siloxane unit and small amounts of the R¹SiO_{3/2} or R²SiO_{3/2} siloxane unit; and mixtures of 2 or more selections from these organopolysiloxanes. R¹ in the preceding formulas represents non-alkenyl monovalent hydrocarbon groups and is exemplified by alkyl groups such as methyl, ethyl, propyl, butyl, pentyl, hexyl, heptyl, and so forth; aryl groups such as phenyl, tolyl, xylyl, naphthyl, and so forth; aralkyl groups such as benzyl, phenethyl, and so forth; and haloalkyl groups such as chloromethyl, 3-chloropropyl, 3,3,3-trifluoropropyl, and so forth. R² in the preceding formulas represents alkenyl, for example, vinyl, allyl, butenyl, pentenyl, hexenyl, and heptenyl.

The organopolysiloxane (B), which functions as a crosslinker for the composition under discussion, contains an average of at least 2 silicon-bonded hydrogen atoms per molecule. This silicon-bonded hydrogen can be bonded in component (B) in molecular chain terminal position and/or in nonterminal position along the molecular chain. The silicon-bonded organic groups in component (B) are preferably selected from the group consisting of alkyl, aryl, aralkyl, and haloalkyl groups. The preferred alkyl groups are methyl, ethyl, propyl, butyl, pentyl, hexyl, and heptyl. The preferred aryl groups are phenyl, tolyl, xylyl, and naphthyl. The preferred aralkyl groups are benzyl and phenethyl. The preferred haloalkyl groups are chloromethyl, 3-chloropropyl, and 3,3,3-trifluoropropyl. Methyl and phenyl are particularly preferred.

The molecular structure of component (B) is exemplified by straight-chain, partially branched straight-chain, cyclic, and branched-chain structures. Component (B) preferably has a substantially straight-chain structure when component (A) has a branched-chain structure. Component (B) preferably has a viscosity at 25°C from 1 to 500,000 centipoise and particularly preferably from 5 to 100,000 centipoise because such values afford a good handling composition and afford a silicone gel product with good physical properties.

The organohydrogenpolysiloxane (B) is preferably selected from the group consisting of trimethylsiloxy-endblocked methylhydrogenpolysiloxanes, trimethylsiloxy-endblocked dimethylsiloxane-methylhydrogensiloxane copolymers, trimethylsiloxy-endblocked dimethylsiloxane-methylhydrogensiloxane-methylphenylsiloxane copolymers, dimethylhydrogensiloxy-endblocked dimethylpolysiloxanes, dimethylhydrogensiloxy-endblocked dimethylsiloxane-methylphenylsiloxane copolymers, dimethylhydrogensiloxy-endblocked methylphenylpolysiloxanes, organopolysiloxane copolymers composed of the R¹₃SiO_{1/2} and R¹₂HSiO_{1/2} siloxane units and small amounts of the SiO_{4/2} siloxane unit, organopolysiloxane copolymers composed of the R¹₂HSiO_{1/2} siloxane unit and small amounts of the SiO_{4/2} siloxane unit, organopolysiloxane copolymers composed of the R¹HSiO_{2/2} siloxane unit and small amounts of the R¹SiO_{3/2} or HSiO_{3/2} siloxane unit, and mixtures of two or more selections from these organopolysiloxanes. R¹ in the preceding formulas is a non-alkenyl monovalent hydrocarbon group and is exemplified by the groups already listed above.

Component (B) is added in an amount that affords values of from 0.1:1 to 10:1 for the molar ratio of silicon-bonded hydrogen in (B) to alkenyl in component (A). A satisfactory cure will not be obtained when this molar ratio is below 0.1:1. When this molar ratio exceeds 10:1, the resulting silicone gel will undergo changes in its physical properties with elapsed time and in extreme cases the composition will not cure.

The platinum catalyst (C) is a catalyst that accelerates the cure of the composition under discussion. This platinum catalyst (C) is exemplified by microfinely divided platinum, platinum black, platinum-on-silica micropowder, platinum-on-active carbon, chloroplatinic acid, alcohol solutions of chloroplatinic acid, platinum-olefin complexes, and platinum-alkenylsiloxane complexes. Another example of (C) comprises thermoplastic resin micropowder that contains a platinum catalyst as described above, wherein the said thermoplastic resin is exemplified by acrylic resins, polycarbonate resins, polystyrene resins, methylcellulose resins, polysilane resins, nylon resins, polyester resins, and polypropylene resins. Component (C) is added in a quantity that will give from 0.1 to 1,000 weight-ppm (based on the composition) platinum metal from this component and particularly preferably from 1 to 500 weight-ppm (based on the composition) platinum metal.

In addition to components (A) to (C), this silicone composition may contain optional components such as, for example, inorganic fillers such as fumed silica, fumed titanium dioxide, iron oxide, aluminum hydroxide, magnesium carbonate, calcium carbonate, zinc carbonate, laminar mica, carbon black, diatomaceous earth, glass fiber, and so forth, and the preceding fillers after surface treatment with an organosilicon compound such as organoalkoxysilane, organochlorosilane, organosilazane, or a low-molecular-weight siloxane compound. A thermally conductive filler must be blended into this silicone composition.

The thermally conductive fillers are exemplified by quartz, alumina, magnesia, zinc white, boron nitride, aluminum nitride, silicon nitride, and mica. The thermally conductive filler content in this silicone composition is from 50 to 95 weight% of the subject thermally conductive silicone composition.

A cure inhibitor can be admixed in order to improve the handling characteristics of the silicone composition. Said cure inhibitor is exemplified by alkyne alcohols such as 3-methyl-1-butyn-3-ol, 3,5-dimethyl-1-hexyn-3-ol, 2-phenyl-3-butyn-2-ol, and so forth; ene-yne compounds such as 3-methyl-3-penten-1-yne, 3,5-dimethyl-3-hexen-1-yne, and so forth; 1,3,5,7-tetramethyl-1,3,5,7-tetravinylcyclotetrasiloxane; 1,3,5,7-tetramethyl-1,3,5,7-tetrahexenylcyclotetrasiloxane; and benzotriazole. The cure inhibitor is preferably added to the subject composition at from 10 to 50,000 weight-ppm.

Within a range in which the objects of the invention are not impaired, the silicone composition under consideration may contain, for example, the following components on an optional basis: organopolysiloxane containing 1 silicon-bonded hydrogen atom or alkenyl group in each molecule, organopolysiloxane lacking silicon-bonded hydrogen and alkenyl, organopolysiloxane containing silicon-bonded alkoxy and silicon-bonded hydrogen or alkenyl in each molecule, organosilicon compounds that contain silicon-bonded alkoxy and the epoxy group in each molecule, organosilicon compounds that contain silicon-bonded alkoxy and the methacryloxy group in each molecule, adhesion promoters, organic solvents, crepe-hardening inhibitors, storage stabilizers, heat stabilizers, flame retardants, plasticizers, thixotropy donors, pigments, dyes, and antimolds.

The method for preparing the silicone composition under consideration is exemplified by preparation in a mixing device such as a Ross® mixer or planetary mixer. "ROSS" is a registered trademark of Charles Ross & Sons Co. of Hauppauge, NY. When the silicone gel composition will be stored as a single-part formulation, it must be stored at temperatures not exceeding 25°C and preferably is refrigerated at' a temperature not above 10°C. Storage of the subject silicone composition divided into two or more parts requires that these parts be mixed to homogeneity just before use.

In order to form the silicone gel sheet by curing the subject silicone composition into a sheet while it resides on the releasing substrate coated with organopolysiloxane having an average of at least 3 reactive groups per molecule, wherein the reactive groups are independently selected from the group consisting of silicon-bonded hydrogen atoms and silicon-bonded alkenyl groups, the silicone composition is poured in the desired thickness on the releasing substrate coated with a thin film of the organopolysiloxane, a defoaming treatment is optionally effected, and the silicone composition is then cured at room or elevated temperature. The resulting silicone gel sheet will be a silicone gel sheet on which there is formed a silicone rubber film in the region in contact with the releasing substrate. The following two methods are examples of the method for curing the silicone composition between organopolysiloxane-coated releasing substrate and releasing substrate not coated with the organopolysiloxane: (i) pouring the silicone composition as described above on the organopolysiloxane-coated releasing substrate, overlaying this with releasing substrate not coated with the organopolysiloxane while avoiding the production of bubbles on the surface of the composition, and curing the silicone composition at room or elevated temperature while applying pressure to the releasing substrates; or (ii) pouring the silicone composition between the described releasing substrates while avoiding bubble formation and then effecting cure at room or elevated temperature. With regard to cure of the silicone composition at elevated temperature, the curing temperature is preferably from 50°C to 250°C and particularly preferably from 70°C to 200°C. The dimensions of the silicone gel sheet are not critical and should be selected as appropriate to the particular application. For example, when the silicone gel sheet is to be used as a thermally conductive silicone gel sheet for electrical or electronic components, from a practical standpoint pouring must be carefully carried out so as to provide a thickness preferably of from 0.01 to 50 mm.

The silicone gel sheet prepared as described above has a silicone rubber film on one of its surfaces. The tack force of this silicone rubber film can be adjusted through the type and molecular structure of the organopolysiloxane that is coated on the surface of the releasing substrate. The tack force of the silicone rubber film is lower than the tack force of the silicone gel. The difference in the tack forces is determined using a probe tack tester in accordance with the method of ASTM D 2979. The tack force of the silicone rubber film preferably does not exceed 80% of the tack force of the associated silicone gel.

Silicone gel sheet prepared as described above differs from the prior-art integral moldings of a silicone gel layer and a silicone rubber layer that have been produced by (i) simultaneously curing an addition reaction-curing silicone gel composition and an addition reaction-curing silicone rubber composition or (ii) applying and curing a silicone rubber composition onto silicone gel already generated by curing a silicone gel composition. The difference is that the subject silicone gel sheet is an integrally molded sheet that lacks a clear or distinct silicone gel layer/silicone rubber layer bonding interface and has a structure in which the silicone gel and silicone rubber film are in fact indivisible. In addition, fabrication of the prior-art silicone gel sheets requires the preparation of two types of compositions, i.e., a silicone gel composition and a silicone rubber composition, while in contrast the preparative method according to the present invention uses just a silicone gel composition. Moreover, the tack force of the silicone rubber film formed on the one surface of the silicone gel sheet can be adjusted through the type and molecular structure of the organopolysiloxane used to coat the surface of the releasing substrate. These features make possible a substantial simplification in the process for fabricating silicone gel sheet.

Because the silicone gel sheet according to the present invention exhibits excellent handling characteristics, it can be used as a shape-conforming pressure-sensitive adhesive sheet. In addition, the admixture of thermally conductive filler combined with the sheet's capacity to intimately connect and interface heat-generating electrical and electronic components to heat-radiating fins or a heat-radiating metal sheet make possible its use as a thermally conductive silicone gel sheet that enables a highly efficient radiation of the heat produced by such components. These heat-generating electrical and electronic components are exemplified by power transistors, power modules, thyristors, rectifiers, transformers, etc. The instant silicone gel sheet offers the advantage of providing a temporary fastening of these components and, after component attachment, permitting facile exchange of the component.

### Examples

The silicone gel sheet according to the present invention and method for the preparation thereof will be explained in greater detail through the working examples that follow. The property values reported in the examples were measured at 25°C. The tack force was measured on both sides of the silicone gel sheets using a probe tack tester (NS Probe Tack Tester from Nichiban) and the method specified in ASTM D 2979. The thermal conductivity was measured by the method specified in JIS R 2618 using a Shortherm QTM instrument (nonsteady-state hot wire method) from Showa Denko Kabushiki Kaisha. The handling characteristics of the silicone gel sheets were evaluated during use of the thermally conductive silicone gel sheet to attach a power transistor to a heat-radiating fin.

### Example 1

A trimethylsiloxy-endblocked dimethylsiloxane-methylhydrogensiloxane copolymer (silicon-bonded hydrogen content = 0.8 weight%) with a viscosity of 5 centipoise was uniformly coated at a rate of 0.003 g/10 cm² on the surface of the fluororesin film in a fluororesin film-coated molding die.

An addition reaction-curing thermally conductive silicone composition was prepared by mixing the following to homogeneity: 100 weight parts dimethylvinylsiloxy-endblocked dimethylpolysiloxane with a viscosity of 380 centipoise and a vinyl content of 0.48 weight%; 0.1 weight part trimethylsiloxy-endblocked dimethylsiloxane-methylhydrogensiloxane copolymer with a viscosity of 5 centipoise and a silicon-bonded hydrogen content of 0.8 weight%; platinum/1,1,3,3-tetramethyl-1,3-divinyldisiloxane complex in a quantity providing 15 weight-ppm platinum metal in the complex based on the total weight of the dimethylpolysiloxane; 450 weight parts alumina powder (average particle size = 3 micrometers) as thermally conductive filler; and 0.01 weight part ethynylhexanol as cure inhibitor. This composition was carefully poured onto the aforementioned fluororesin film so as to avoid bubble formation. Another molding die, in this case coated with untreated fluororesin film, was laid onto the composition in intimate contact therewith while avoiding bubble production. The dies were heated for 15 minutes at 100°C under a pressure of 50 kgf/cm² to fabricate a silicone gel sheet with a thickness of 1 mm. The silicone gel had a penetration of 55.

A silicone rubber film was formed on one surface of this silicone gel sheet. This was a low-tack silicone rubber film with a tack force of 8 g f, whereas the silicone gel on the other surface was strongly tacky with a tack force of 120 g·f. The thermal conductivity of this silicone gel sheet was 3 x 10⁻³ cal/cm·sec·°C on both sides.

A thermally conductive silicone gel sheet was prepared by cutting the silicone gel sheet to the size of a power transistor. The tackier surface of this thermally conductive silicone gel sheet was placed on the power transistor, at which point thorough contact and adhesion was noted. The silicone rubber film on this thermally conductive silicone gel sheet was well-resistant to fingerprint, dust, and speck uptake. An aluminum heat-radiating fin was then pressed onto the silicone rubber film surface of the thermally conductive silicone gel sheet and fastened with a screw. After this, the heat-radiating fin was removed and the thermally conductive silicone gel sheet could be easily peeled off. There was no change in the shape of the thermally conductive silicone gel sheet. In addition, this thermally conductive silicone gel sheet could be re-attached to the power transistor and thus could be reused.

### Example 2

The surface of the fluororesin film in a fluororesin film-coated molding die as in Example 1 was uniformly coated at a rate of 0.003 g/10 cm² with a 1 : 99 (weight ratio) mixture of trimethylsiloxy-endblocked dimethylsiloxane-methylhydrogensiloxane copolymer (viscosity = 5 centipoise, silicon-bonded hydrogen content = 0.8 weight%) and trimethylsiloxy-endblocked dimethylsiloxane-methylhydrogensiloxane copolymer with a viscosity of 20 centipoise and a silicon-bonded hydrogen content = 0.1 weight%.

The addition reaction-curing thermally conductive silicone composition described in Example 1 was poured onto the fluororesin film; another molding die, in this case coated with untreated fluororesin film, was clamped on; and heating was carried out for 15 minutes at 100°C under a pressure of 50 kgf/cm² to fabricate a silicone gel sheet with a thickness of 1 mm. The silicone gel had a penetration of 55.

A silicone rubber film was formed on one surface of this silicone gel sheet. This was a low-tack silicone rubber film with a tack force of 65 g·f, whereas the silicone gel on the other surface was strongly tacky with a tack force of 120 g f. The thermal conductivity of this silicone gel sheet was 3 x 10⁻³ cal/cm·sec·°C on both sides.

A thermally conductive silicone gel sheet was fabricated from this silicone gel sheet as in Example 1. The silicone rubber film on this thermally conductive silicone gel sheet was well-resistant to fingerprint, dust, and speck uptake. The thermally conductive silicone gel sheet could be easily peeled from the power transistor and heat-radiating fin, and in both cases no change in shape occurred. This permitted its reuse.

### Comparative Example 1

A 1 mm-thick silicone gel sheet was prepared as in Example 1, but in this case without coating the fluororesin film surface in the fluororesin film-coated molding die with the trimethylsiloxy-endblocked dimethylsiloxane-methylhydrogensiloxane copolymer (viscosity = 5 centipoise, silicon-bonded hydrogen content = 0.8 weight%) as was done in Example 1. The silicone gel sheet had a penetration of 55.

This silicone gel sheet had a high tack and had a tack force of 120 g·f on both sides. The thermal conductivity of this silicone gel sheet was 3 x 10⁻³ cal/cm sec °C on both sides.

A thermally conductive silicone gel sheet was prepared from this silicone gel sheet as in Example 1. This thermally conductive silicone gel sheet took up fingerprints, dust, and specks. The heat-radiating fin could not be easily peeled from the power transistor, and the forcible peeling of the heat-radiating fin resulted in stretching of a portion of the thermally conductive gel sheet and finally in tearing. This thermally conductive silicone gel sheet could not be reused.

Despite the pressure-sensitive adhesive character of the silicone gel sheet according to the present invention, this sheet is characterized by excellent handling characteristics because a silicone rubber film is formed on one and only one of its surfaces. The preparative method according to the present invention is characterized by the ability to prepare the subject silicone gel sheet in a highly efficient manner. When loaded with thermally conductive filler, the silicone gel sheet according to the present invention can be used as a thermally conductive silicone gel sheet for attaching heat-generating electrical and electronic components to heat-radiating fins or heat-radiating metal sheets. This sheet is characterized by the ability to temporarily affix these components and, after component attachment, to permit facile exchange of these components. Finally, the preparative method according to the present invention is characterized by the ability to prepare the subject thermally conductive silicone gel sheet in a highly efficient manner.

## Claims

1. A method for preparing a thermally conductive silicone gel sheet, said method comprising the steps of
(A) coating a release substrate with a thin film of an organopolysiloxane having an average of at least three reactive groups per molecule, wherein said reactive groups are individually selected from the group consisting of silicon-bonded hydrogen atoms and silicon-bonded alkenyl groups;
(B) contacting the coated release substrate with an addition reaction-curing silicone composition having 50 to 95% by weight based on the weight of the thermally conductive gel of a thermally conductive filler; and
(C) then curing the addition reaction-curing silicone composition.

2. The method of claim 1, wherein the releasing substrate is coated with 0.00001 to 0.1 g/10 cm² of the organopolysiloxane.

3. The method of claim 1, further comprising the step of
(D) contacting the addition reaction-curing composition with a release substrate that is free of an organopolysiloxane having an average of three reactive groups per molecule, wherein the reactive groups are selected from the group consisting of silicon-bonded hydrogen atoms and silicon-bonded alkenyl groups, prior to curing the addition reaction-curing silicone composition.

4. A thermally conductive silicone gel sheet, comprising silicone gel in the form of a sheet and a silicone rubber film; wherein said sheet has a surface; said silicone gel has a penetration value of 20 to 200, when measured according to JIS K 2207, and is obtainable by the method of claim 1 and wherein every other surface of said sheet is free of a silicone rubber film.

5. The silicone gel sheet of claim 4, wherein the tack force measured according to ASTM D 2979 of a surface of the silicone rubber film is no greater than 80% of the tack force of a surface, other than the surface having the silicone rubber film, of the silicone gel.

## Patentansprüche

1. Verfahren zur Herstellung einer thermisch leitfähigen Silicongelfolie, wobei dieses Verfahren die Schritte umfasst:
(A) Beschichten eines Trennsubstrats mit einem dünnen Film eines Organopolysiloxans mit im Mittel wenigstens drei reaktiven Gruppen pro Molekül, wobei diese reaktiven Gruppen unabhängig voneinander ausgewählt sind aus der Gruppe bestehend aus siliciumgebundenen Wasserstoffatomen und siliciumgebundenen Alkenylgruppen,
(B) In-Kontakt-Bringen des beschichteten Trennsubstrats mit einer durch Additionsreaktion härtbaren Siliconzusammensetzung mit 50 bis 95 Gew.-%, bezogen auf das Gewicht des thermisch leitfähigen Gels, eines thermisch leitfähigen Füllstoffs, und
(C) dann Härten der durch Additionsreaktion härtbaren Siliconzusammensetzung.

2. Verfahren nach Anspruch 1, wobei das Trennsubstrat mit 0,00001 bis 0,1 g/10 cm² des Organopolysiloxans beschichtet ist.

3. Verfahren nach Anspruch 1, das zusätzlich den Schritt umfasst:
(D) In-Kontakt-Bringen der durch Additionsreaktion härtbaren Siliconzusammensetzung mit einem Trennsubstrat, das frei von einem Organopolysiloxan mit im Mittel drei reaktiven Gruppen pro Molekül ist, wobei die reaktiven Gruppen ausgewählt sind aus der Gruppe bestehend aus siliciumgebundenen Wasserstoffatomen und siliciumgebundenen Alkenylgruppen, vor dem Härten der durch Additionsreaktion härtbaren Siliconzusammensetzung.

4. Thermisch leitfähige Silicongelfolie, umfassend Silicongel in der Form einer Folie und einen Siliconkautschukfilm, wobei diese Folie eine Oberfläche aufweist, dieses Silicongel einen Penetrationswert von 20 bis 200 aufweist, wenn gemäß JIS K 2207 gemessen, und erhältlich ist durch das Verfahren nach Anspruch 1 und wobei jede andere Oberfläche dieser Folie frei von einem Siliconkautschukfilm ist.

5. Silicongelfolie nach Anspruch 4, wobei die Klebkraft, gemessen nach ASTM D 2979, einer Oberfläche des Siliconkautschukfilms nicht mehr als 80% der Klebkraft einer Oberfläche des Silicongels beträgt, die nicht die Oberfläche mit dem Siliconkautschukfilm ist.

## Revendications

1. Procédé pour préparer une feuille de gel de silicone thermiquement conducteur, ledit procédé comprenant les étapes de :
(A) revêtement d'un substrat de séparation avec un film mince d'un organopolysiloxane ayant une moyenne d'au moins trois groupes réactifs par molécule, où lesdits groupes réactifs sont choisis individuellement dans le groupe consistant en les atomes d'hydrogène liés au silicium et les groupes alcényle liés au silicium ;
(B) mise en contact du substrat de séparation revêtu avec une composition de silicone durcissant par une réaction d'addition ayant 50 à 95 % en poids sur la base du poids du gel thermiquement conducteur d'une charge thermiquement conductrice ; et
(C) ensuite durcissement de la composition de silicone durcissant par une réaction d'addition.

2. Procédé selon la revendication 1 où le substrat de séparation est revêtu avec 0,00001 à 0,1 g/10 cm² d'organopolysiloxane.

3. Procédé selon la revendication 1 comprenant en outre l'étape de
(D) mise en contact de la composition durcissant par une réaction d'addition avec un substrat de séparation qui est dépourvu d'organopolysiloxane ayant une moyenne de trois groupes réactifs par molécule, où les groupes réactifs sont choisis dans le groupe consistant en les atomes d'hydrogène liés au silicium et les groupes alcényle liés au silicium, avant de durcir la composition de silicone durcissant par une réaction d'addition.

4. Feuille de gel de silicone thermiquement conducteur comprenant un gel de silicone sous forme d'une feuille et un film de caoutchouc de silicone ; où ladite feuille a une surface ; ledit gel de silicone a un indice de pénétration de 20 à 200, quand il est mesuré selon JIS K 2207, et peut être obtenu par le procédé selon la revendication 1 et où toute autre surface de ladite feuille est dépourvue de film de caoutchouc de silicone.

5. Feuille de gel de silicone selon la revendication 4 où la force de pégosité mesurée selon ASTM D 2979 d'une surface du film de caoutchouc de silicone n'est pas supérieure à 80 % de la force de pégosité d'une surface, différente de la surface ayant le film de caoutchouc de silicone, du gel de silicone.
